# EUROPÄISCHE PATENTSCHRIFT

(11) **EP 1 815 335 B1**
(45) Veröffentlichungstag und Bekanntmachung des Hinweises auf die Patenterteilung: **25.07.2018**
(21) Anmeldenummer: 05802291.4
(22) Anmeldetag: 09.11.2005
(51) Int. Cl.: G06F 11/07

(54) **VERFAHREN UND VORRICHTUNG ZUR SICHEREN PARAMETRIERUNG VON ELEKTRONISCHEN GERÄTEN**
METHOD AND DEVICE FOR SECURE PARAMETERIZATION OF ELECTRONIC DEVICES
Procédé et dispositif de paramétrsiation sécurisée de dispositifs eletroniques

(30) Priorität: 19.11.2004 DE 102004055971
(43) Veröffentlichungstag der Anmeldung: 08.08.2007
(73) Patentinhaber: KW-Software GmbH, 32657 Lemgo (DE)
(72) Erfinder: SCHLETTE, Steffen, 32547 Bad Oeynhausen (DE)
(74) Vertreter: Kampfenkel, Klaus
(86) Internationale Anmeldenummer: PCT/EP2005/012006
(87) Internationale Veröffentlichungsnummer: WO 2006/053668

(56) Entgegenhaltungen:
- EP-A- 1 126 342
- DE-A1- 10 252 277
- US-A- 5 428 813
- US-B1- 6 636 990
- HALANG W A: "Automated Control Systems for the Safety Integrity Levels 3 and 4" OBJECT-ORIENTED REAL-TIME DEPENDABLE SYSTEMS, 2003. WORDS 2003 FALL. THE NINTH IEEE INTERNATIONAL WORKSHOP ON ANACAPRI, ITALY 01-03 OCT. 2003, PISCATAWAY, NJ, USA,IEEE, 1. Oktober 2003 (2003-10-01), Seiten 35-35, XP010783589 ISBN: 0-1795-2054-5

## Beschreibung

Die Erfindung betrifft ein Verfahren und eine Vorrichtung zur sicheren Parametrierung, d.h. Konfiguration, gemäß IEC 61508 SIL 1 bis 3 oder EN 954-1 Kategorie 1 bis 4 von sicheren elektronischen Geräten, wie insbesondere von Antrieben, SPSen (Speicher Programmierbaren Steuerungen) und Embedded Controllern, also im Wesentlichen in größeren System eingebettete bzw. integrierte Rechnereinheiten;

Heute wird die sichere Parametrierung gemäß IEC 61508 SIL 3 oder EN 954-1 Kategorie 4 in herkömmlicher Weise durch die Eingabe jeweils gewünschter oder benötigter Parameter innerhalb einer Programm-Oberfläche eines nicht-sicheren Software-Tools auf einem PC oder einem anderen entsprechenden Bediengerät durchgeführt. Danach erfolgt der Download der Parameter und einer Prüfsumme über den kompletten Parametersatz über einen beliebigen Kommunikationskanal auf das elektronische Gerät für die Sicherheitsfunktionalität. Nachteilig hierbei ist jedoch insbesondere, dass die einzelnen Parameter und die Prüfsumme anschließend noch einmal von dem elektronischen Gerät auf den PC zurückgespielt werden müssen, um aus Sicherheitsgründen nach dem Rücklesen jeweils noch einmal durch den Anwender bestätigt zu werden. Nur so lassen sich bisher mögliche Datenverfälschungen erkennen. Die erforderliche, Anwender-basierte Bestätigung jedes einzelnen vom elektronischen Gerät rückgelesenen Parameters wird applikationsspezifisch durch eine explizite Zustimmfunktion im Software-Tool oder durch handschriftliche Dokumentation in einem Protokoll sichergestellt. Erst danach kann davon ausgegangen werden, dass die korrekten Parameter auf dem elektronischen Gerät zur Verfügung stehen und der eigentliche Programmablauf der Sicherheitsfunktionalität des elektronischen Gerätes kann gestartet werden.

Insbesondere auch aufgrund der häufig sehr hohen Anzahl von Sicherheits-Parametern pro elektronischem Gerät, z.B. Antrieb oder Sicherheitssteuerung, besteht jedoch darüber hinaus weiterhin das Risiko, dass auch bei einem solchen nachträglichen Kontrollieren eine Verfälschung leicht übersehen werden kann oder die Kontrolle nicht mit der nötigen Sorgfalt durchgeführt wird. Ferner kann nicht mit hoher Wahrscheinlichkeit ausgeschlossen werden, dass, z.B. durch mangelnde Konzentration des Anwenders und insbesondere bei einer Parametrierung mehrerer sicherer elektronischen Geräte nacheinander, Eingabefehler und/oder Bestätigungsfehler gemacht werden.

Eine wesentliche Aufgabe der Erfindung ist es daher, einen Weg aufzuzeigen, welcher für eine sichere Parametrierung gemäß IEC 61508 SIL 3 oder EN 954-1 Kategorie 4 das explizite Rücklesen der Parameter vom sicheren elektronischen Gerät und Bestätigen dieser jeweiligen Parameter durch den Anwender überwindet.

Die erfindungsgemäße Lösung ist auf überraschende Weise bereits durch einen Gegenstand mit den Merkmalen nach einem der anhängenden unabhängigen Ansprüche gegeben.

Vorteilhafte und/oder bevorzugte Ausführungsformen oder Weiterbildungen sind Gegenstand der jeweiligen Unteransprüche.

Erfindungsgemäß ist somit vorgesehen zur Parametrierung, d.h. zur Konfiguration vorgesehene Parameterwerte, welche über eine Anwenderoberfläche einer elektronischen Bedieneinrichtung ausgewählt oder eingegeben werden und anschließend an das elektronische Gerät übertragen werden in wenigstens einem von der Bedieneinrichtung zugreifbaren Speicher zu halten und zur Verifikation der sicheren Parametrierung aus dem Speicher wenigstens einmal rückzulesen.

In bevorzugter Weise erfolgt vor Übertragung an das elektronische Gerät ein Rücklesen der Parameterwerte aus einem von der Bedieneinrichtung zugreifbaren Speicher, so dass bereits die Auswahl oder Eingabe von Parameterwerten absicherbar ist.

Um auch die Übertragung selbst entsprechend Abzusichern, erfolgt ferner in bevorzugter Weiterbildung ein Rücklesen der Parameterwerte aus einem von der Bedieneinrichtung zugreifbaren Speicher nach Übertragung an das elektronische Gerät.

Für eine einfache Umsetzung der gesicherten Auswahl oder Eingabe ist in zweckmäßiger Ausführung der Erfindung ferner vorgesehen, für jeden einzelnen Parameterwert nach Auswahl oder Eingabe, die Schritte des Speicherns des Parameterwertes in wenigstens einem des wenigstens einen von der Bedieneinrichtung zugreifbaren Speicher, des Löschens des Parameterwertes auf einer Anwenderanzeige der Bedieneinrichtung und des erneutes Aufbauens der Anwenderanzeige durch Rücklesen des gespeicherten Parameterwertes in automatisierter Prozessroutine durchzuführen.

Insbesondere, um auch systematische Fehler in der Datenhaltung bzw. Speicherung im Wesentlichen vollständig auszuschließen, ist ferner eine gesicherte Datenhaltung durch eine gesicherte Modifikation eines zu ändernden Parameterwertes in einem Arbeitsspeicher und ein gesichertes Speichern und Laden von Parameterwerten in bzw. aus einem nicht-flüchtigen Speicher vorgesehen.

Hierzu hat sich in vorteilhafter Weise das Überprüfen von auf den ausgewählten oder eingegebenen Parameterwerten basierenden Checksummen bewährt.

In Weiterbildung sieht die Erfindung eine gesicherte Modifikation durch Vorausberechnung der zu erwartenden Checksumme der Parameterwerte im Arbeitsspeicher, Modifikation des Parameterwertes und nachfolgendender Kontrolle der tatsächlichen Checksumme der Parameterwerte im Arbeitsspeicher vor.

In weiterer vorteilhafter Ausführung ist ferner zur weiteren Erhöhung der Sicherheit vorgesehen, ein Umwandeln eines Parametersatzes von zu übertragenden Parameterwerten von der Darstellung in einem Speicher zu einer zur Übertragung des Parametersatzes erforderlichen bitweisen nacheinanderangeordneten Darstellung der Parameterwerte in einer Folge von Bytes durch Umwandelung nach wenigstens zwei verschiedenen Methoden und Überprüfung der resultierenden Bytefolgen und derer Checksummen auf Gleichheit durchzuführen.

Wird aus den resultierenden Bytefolgen und deren Checksummen ein zu übertragender Parametersatz kombiniert, ist das automatisierte Erkennen einer nicht oder fehlerhaft durchgeführten Überprüfung auf einfachste Weise gewährleistbar.

Wird in zweckmäßiger Weise der zu übertragende Parametersatz zu einer Folge von Bytes mit Parameterwerten und einer Checksumme über die Folge von Bytes kombiniert, muss nach Übertragung des kombinierten Parametersatzes lediglich die Checksumme des übertragenen Parametersatzes zurück gelesen werden und mit der in einem von der Bedieneinrichtung aus zugreifbaren Speicher gehaltenen Checksumme des entsprechenden Parametersatzes vor Übertragung zur Gewährleistung einer gesicherten Übertragung verglichen werden.

Zweckmäßiger Weise wird das Verfahren Rechnergestützt und Softwarebasiert durchgeführt, so dass eine jeweilige applikationsspezifische Anpassung höchst effizient sichergestellt ist.

Zur Implementierung eines sicheren teil- oder vollautomatisiertes Verfahren ist ferner vorgesehen, dass lediglich unter Ansprechen auf einen innerhalb des Gesamtablaufs der sicheren Parametrierung jeweils in korrekter bzw. fehlerfreier Weise abgeschlossenen Verarbeitungsschritt ein nächstfolgender Verarbeitungsschritte eingeleitet wird.

Die Erfindung schlägt ferner eine insbesondere zur Durchführung des Verfahren entsprechend ausgebildete Vorrichtung zur sicheren Parametrierung gemäß IEC 61508 SIL 3 oder EN 954-1 Kategorie 4 von elektronischen Geräten, vor, welche wenigstens ein Sicherheitsmodul, welches die Speicherung von zur Übertragung an das elektronische Gerät zu dessen Parametrierung vorgesehene und über eine Anwenderoberfläche einer elektronischen Bedieneinrichtung ausgewählte oder eingegebene Parameterwerte in wenigstens einem von der Bedieneinrichtung zugreifbaren Speicher sowie wenigstens ein Rücklesen der Parameterwerte aus dem Speicher zur Verifikation der sicheren Parametrierung bewirkt.

In bevorzugter Weise steuert das wenigstens eine Sicherheitsmodul die Anwenderoberfläche zur Darstellung und Bearbeitung der Parameter zur Parametrierung und/oder bewirkt alleine oder in Zusammenwirkung mit anderen Modulen und/oder der elektronischen Bedieneinrichtung die Einleitung und Umsetzung der entsprechenden Verarbeitungsschritte.

In zweckmäßiger Weiterbildung ist das wenigstens eine Sicherheitsmodul wenigstens teilweise ein Software-basiertes Modul und insbesondere ein integraler Bestandteil einer kompletten Software-Plattform.

Die Erfindung umfasst somit ferner ein rechnerlesbares Speichermedium mit darauf gespeicherten, auslesbaren Informationen, die ausgelesen durch eine rechnergestützte Einrichtung zur Auswahl oder Eingabe von zur Übertragung an ein sicheres elektronisches Gerät für dessen Parametrierung vorgesehenen Parametrierung eine Anpassung der Einrichtung zur Durchführung des Verfahrens nach der Erfindung bewirkt.

Das erfindungsgemäße Verfahren und die erfindungsgemäße Vorrichtung eignen sich insbesondere zur sicheren Parametrierung von Antrieben, Speicherprogrammierbaren Steuerungen oder elektronischen Sicherungseinrichtungen und/oder können zur Übertragung im Wesentlichen jeden beliebigen Feldbus oder einen anderen Kommunikationskanal nutzen.

Wesentliche Vorteile der Erfindung sind somit, dass die einzelnen Schritte von der Dateneingabe, über die Datenhaltung bzw. Datenspeicherung bis zur Erzeugung der Download-Datei für die sichere Parametrierung und deren Übertragung an das elektronische "Ziel"-Gerät durch jeweilige Sicherheitsfunktionen einzeln abgesichert werden, so dass Datenverfälschungen durch die rechnergestützte Verarbeitung, insbesondere unter Verwendung eines applikationsspezifisch geeigneten, z.B. Microsoft Windows basierenden, Software-Programms entsprechend der geforderten Fehlerwahrscheinlichkeit gemäß IEC 61508 bis SIL 3 ausgeschlossen werden.

Die einzelnen und/oder das Zusammenwirken der durch ein oder mehrere, im Bediengerät zur Vorgabe der Sicherheitsparameter implementierten, Hardware und/oder Software basierten Sicherheitsmodule erfindungsgemäß bewirkten Sicherheitsfunktionen gewährleisten somit einen Sicherheitsstandard, der hoch genug ist, dass ein Rücklesen aus dem elektronischen "Ziel"-Gerät und nachträgliches Kontrollieren der Parameter durch den Anwender nicht mehr erforderlich ist.

Weitere Merkmale und Vorteile der Erfindung werden aus der nachfolgenden beispielhaften Beschreibung einer bevorzugten Ausführungsform unter Bezugnahme auf die beigefügten Zeichnungen ersichtlich. Dokument EP1126342 offenbart ersichtlich eine Vorrichtung und ein Verfahren zur Parametrierung und Programmierung eines elektronischen Geräts, welches einen Benutzer oder einen Administrator Modus umfasst.

In den Zeichnungen zeigen:
- Fig. 1: ein allg. Ablaufschema einer bevorzugten Ausführungsform von angewandten Sicherheitsfunktionalitäten gemäß der Erfindung,
- Fig. 2: stark vereinfacht eine gesicherte Modifikation von Parameterwerten durch Vorausberechnung und Vergleich gemäß der Erfindung,
- Fig. 3: ein Diagramm betreffend beispielhafte Abläufe vom Laden einer Parameterdatei von der Festplatte eines Bediengerätes, über das Modifizieren der Parameterwerte im RAM und dem Speichern der Parameterdatei auf der Festplatte gemäß der Erfindung,
- Fig. 4: eine Anwenderoberfläche eines gemäß der Erfindung angepassten Bediengerätes zur Parametrierung von sicheren Eingängen eines elektronischen "Ziel"-Geräts, und
- Fig. 5: eine Anwenderoberfläche eines gemäß der Erfindung angepassten Bediengerätes zur Parametrierung von Sicherheitsfunktionen eines elektronischen "Ziel"-Geräts.

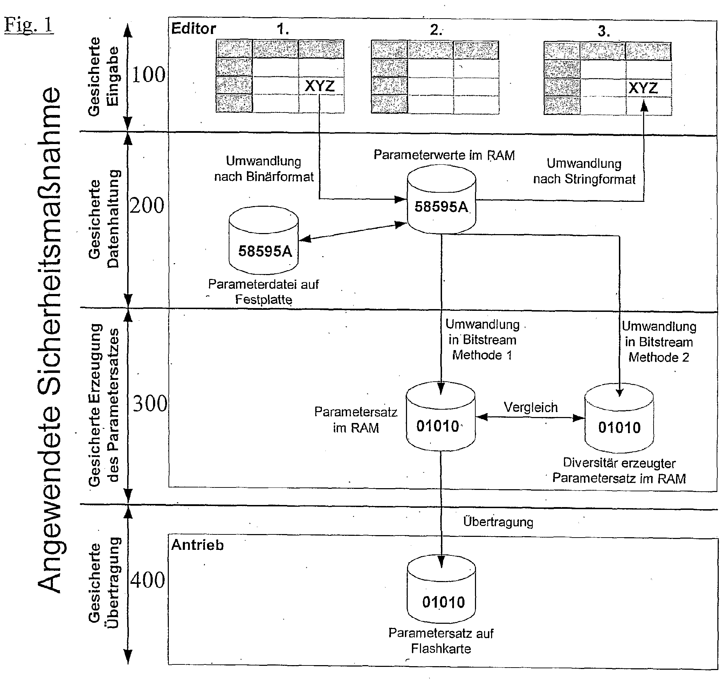

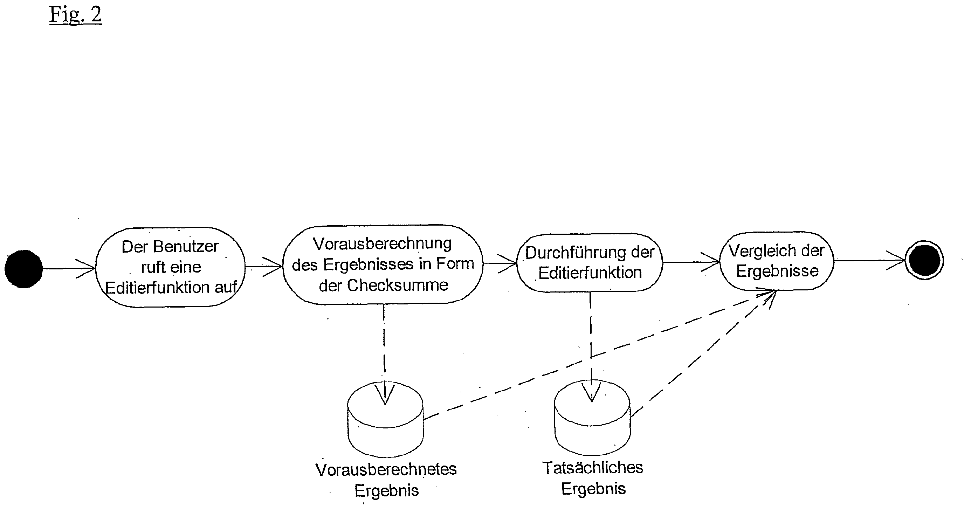

Nachfolgend wird zunächst auf die Fig. 1 und 2 Bezug genommen, welche jeweils ein vereinfachtes Ablaufschema eines bevorzugte Sicherheitsfunktionalitäten bewirkenden, auf einem einen Editor umfassenden Bediengerät zur Parametrierung gemäß IEC 61508 SIL 3 oder EN 954-1 Kategorie 4 von sicheren elektronischen Geräten implementierten Sicherheitsmodulkonzeptes bzw. einer unter Ansprechen auf einen Aufruf einer Editierfunktion durch den Anwender bewirkten Vorausberechnung zur sicheren Modifikation eines Parameterwertes zeigen.

Das Aktivieren der einzelnen Sicherheitsfunktionalitäten durch das oder die implementierten Sicherheitsmodule erfolgt hierbei automatisiert unter Ansprechen auf bestimmte jeweilige Auslösebedingungen.

Wie bei Fig. 1 zu sehen, sind die aufgezeigten angewandten Sicherheitsfunktionalitäten in vier aufeinander folgende Stufen 100, 200, 300 und 400 eingeteilt.

Die erste erfindungsgemäß bewirkte, mit dem Bezugszeichen 100 gekennzeichnete Sicherheitsfunktionalität gewährleistet eine gesicherte Eingabe durch Löschen und Wiederaufbau der Editieranzeige. Durch das automatische Löschen und Wiederaufbauen der Editieranzeige kann der Anwender somit die Parameter bereits bei der Eingabe am Bildschirm nochmals kontrollieren. Diese angewandte Sicherheitsfunktionalität nutzt folglich die Tatsache aus, dass der Anwender weiß welche Parameterwerte eingestellt werden sollen. Da der Anwender bereits im Wesentlichen unmittelbar im Anschluss nach Auswahl oder Eingabe, z.B. über eine Tastatur, der vorzugebenden Parameter diese nach automatischen Wiederaufbau des Ergebnisses am Bildschirm zunächst kontrollieren muss, erübrigt sich das bisher zeitintensive Rücklesen vom elektronischen "Ziel"-Gerät und erst darauf folgende zusätzliche Kontrollieren der Parameter.

Die zweite erfindungsgemäß bewirkte, mit dem Bezugszeichen 200 gekennzeichnete Sicherheitsfunktionalität gewährleistet eine gesicherte Datenhaltung bzw. -Speicherung durch Vorausberechnung, wie nachfolgend beschrieben.

Die dritte erfindungsgemäß bewirkte, mit dem Bezugszeichen 300 gekennzeichnete Sicherheitsfunktionalität gewährleistet eine gesicherte Erzeugung des Parametersatzes durch Diversität, also durch Erzeugung zunächst wenigstens zweier Parametersätze durch unterschiedliche Berechnungsmethoden, und anschließenden Vergleich.

Die dritte erfindungsgemäß bewirkte, mit dem Bezugszeichen 400 gekennzeichnete Sicherheitsfunktionalität gewährleistet schließlich eine gesicherte Übertragung eines nach Vergleich verifizierten Parametersatzes an das sichere elektronische Gerät durch Checksummenüberprüfung.

Gemäß einer bevorzugten Ausführung eines in ein Bediengerät zur sicheren Parametrierung gemäß vorstehenden Standards implementierten Sicherheitsmoduls zur Gewährleistung der Funktionalität einer gesicherten Eingabe ist folgende Wirkungs- bzw. Funktionsweise vorgesehen.

Unter Ansprechen auf die Eingabe oder Auswahl eines Parameterwertes mittels eines Editors durch den Anwender, bei Fig. 1 schematisch bei (1.) der gesicherten Eingabe 100 angezeigt, z.B. durch entsprechende Betätigung einer "Übernahme" oder "Enter" Taste/Buttons, wird der Parameterwert automatisch an die Datenhaltung des Bediengerätes zur Speicherung, insbesondere zur gesicherten Speicherung, wie nachfolgend beschrieben, übergeben.

Daraufhin wird der eingegebene oder ausgewählte Parameterwert von der Anzeige gelöscht, bei Fig. 1 schematisch bei (2.) der gesicherten Eingabe 100 angezeigt. Anschließend wird die Anzeige, bei Fig. 1 schematisch bei (3.) der gesicherten Eingabe 100 angezeigt, wieder erneut aufgebaut, und zwar unter Zugriff auf den gerade zuvor an die Datenhaltung übergebenen Parameterwert.

Erkennt der Anwender nach Neuaufbau der Anzeige den angezeigten Parameterwert als den eingegebenen oder ausgewählten wieder, ist sichergestellt, dass genau dieser Parameterwert auch in der Datenhaltung gespeichert wurde, da die Anzeige gelöscht und neu aus der Datenhaltung aufgebaut wurde. Diese Wirkkette kürzt somit das bisher übliche Verfahren des Rücklesens vom zu parametrierenden Gerät auf ein Rücklesen aus der Datenhaltung wesentlich ab.

Systematische Fehler wie z.B., dass der Wert "10" immer als "1" in der Datenhaltung gespeichert wird, nach Rücklesen aus der Datenhaltung des Bediengeräts aber wieder als Wert "10" angezeigt wird, sind unwahrscheinlich, da unterschiedliche Funktionen zum Umwandeln des angezeigten Strings in einen Binärwert zur Speicherung in der Datenhaltung und umgekehrt verwendet werden.

Um diese Fehlerklasse aber im Wesentlichen gänzlich auszuschließen, schlägt die Erfindung eine weitergehende Verifikationstiefe zur Gewährleistung einer gesicherten Datenhaltung vor.

Hierzu ist in bevorzugter Weise ein Sicherheitsmodul oder das Zusammenwirken von Sicherheitsmodulen vorgesehen, welches eine gesicherte Datenhaltung basierend auf einer gesicherten Modifikation der Parameterwerte im RAM, also im Arbeitsspeicher, einerseits und andererseits auf einem gesicherten Speichern und Laden der Parameterdatei auf einer Festplatte oder einem anderen nichtflüchtigen Speicher bewirkt.

Die Datenhaltung für die Parameterwerte im RAM des Parametrierungseditors wird hierzu zweckmäßiger Weise durch eine Checksummenüberprüfung gesichert. Ferner wird sichergestellt, dass bei einer Eingabe immer nur der tatsächlich zu verändernde Parameterwert modifiziert wird. Alle anderen, gegebenenfalls in einer zuvor von dem nicht-flüchtigen Speicher geladenen Parameterdatei enthaltenen, im RAM gehaltenen Parameterwerte werden vor der Editierung eines Parameters für Änderungen gesperrt und nach der Editierung des Parameters auf Verfälschung überprüft. Dies geschieht unter Bezugnahme auf Fig. 2 bevorzugt unter Ansprechen auf einen Aufruf einer Editierfunktion durch eine Vorausberechnung der zu erwartenden CRC der Parameterwerte im RAM, der Modifikation eines Parameterwertes und der Kontrolle der tatsächlichen CRC der Parameterwerte im RAM. Erst nach erfolgter Kontrolle, Neuaufbau der Anzeige und entsprechender vorbeschriebener Rückkontrolle durch den Anwender wird die resultierende Parameterdatei auf der Festplatte wieder gesichert.

Für die Übertragung der Parameterwerte an das elektronische Gerät werden wiederum auf in den RAM geladene bzw. zu ladende Parameterwerte zurückgegriffen. Da üblicher Weise jedoch im RAM Parameterwerte in einer anderen Weise vorliegen als die an das sichere elektronische Gerät zu übertragenden muss in diesen Fällen der zu übertragende Parametersatz zunächst aus den im RAM vorgehaltenen Parameterwerten erzeugt werden. So werden beispielsweise im RAM Parameterwerte häufig in normalen C/C++ Datentypen, wie z.B. ULONG, gespeichert. Im zu übertragenden Parametersatz sind die Werte dagegen bitweise hintereinander in einem Bytestream gespeichert.

Da bei der Umwandlung der Werte von der Darstellung im RAM zu der Darstellung im Bytestream systematische oder sporadische Fehler nicht ausgeschlossen werden können, schlägt die Erfindung ferner einen Einsatz bzw. ein Zusammenwirken von Sicherheitsmodulen vor, welches gemäß der mit dem Bezugszeichen 300 in Fig. 1 gekennzeichneten Sicherheitsfunktionalität eine solche Umwandlung zunächst nach wenigstens zwei verschiedenen Methoden durchführt und die beiden resultierenden Bytestreams und ihre jeweiligen Checksummen auf Gleichheit prüft.

Erst unter Ansprechen auf das Erzeugen von diversitären Bytestreams und auf das Erkennen auf Gleichheit der unterschiedlich erzeugten Bytestreams und der jeweiligen Checksummen und wird der zu übertragende Parametersatz durch Kombination erzeugt, z.B. werden der Bytestream des nach Methode 1 gemäß Fig. 1 erzeugten Parametersatzes und die Checksumme des nach Methode 2 gemäß Fig. 1 erzeugten Parametersatzes zu dem resultierenden und somit zu dem gesichert erzeugten, an das elektronische "Ziel"-Gerät zu übertragenden Parametersatz kombiniert. Eine nicht oder fehlerhaft durchgeführte Überprüfung auf Gleichheit wird folglich je nach spezifischer Modulausbildung und/oder Implementierung der Sicherheitsfunktion auf dem sicheren Gerät und/oder auf dem Bediengerät erkannt und kann dem Anwender entsprechend angezeigt werden.

Die diversitäre Erzeugung des Parametersatzes liefert somit einen Bytestream mit Parameterwerten und eine Checksumme über den Bytestream. Beides zusammen wird automatisch oder auf Anforderung des Anwenders auf das Gerät mit Sicherheitsfunktionen übertragen.

In bevorzugter Weiterbildung wird auch die Übertragung durch eine weitere Sicherheitsfunktionalität 400 gesichert.

Zweckmäßiger Weise wird hierzu nach Übertragung die Checksumme wieder zurück gelesen und mit der Checksumme im Editor verglichen. Das Ergebnis dieser Überprüfung wird dem Anwender z.B. in Form einer Messagebox mitgeteilt, z.B. "Senden erfolgreich" / "Senden nicht erfolgreich". So sollte z.B. über entsprechende Icons oder andere Anzeigen auf einer dem Anwender zur Bedienung des Bediengerätes zur Verfügung gestellten Anwenderoberfläche dem Anwender insbesondere das nicht erfolgreiche Senden deutlich hervorgehoben werden.

Die Erfindung sieht ferner die Ausbildung der Sicherheitsmodule zur Umsetzung einer Sicherheitsfunktionalität derart vor, dass bei jedem Neustart des sicheren Gerätes die Checksumme des auf das Gerät übertragenen Bytestreams überprüft wird und bei einer erkannten Verfälschung des Bytestreams ein Anlauf verhindert wird bzw. ausgeschlossen ist.

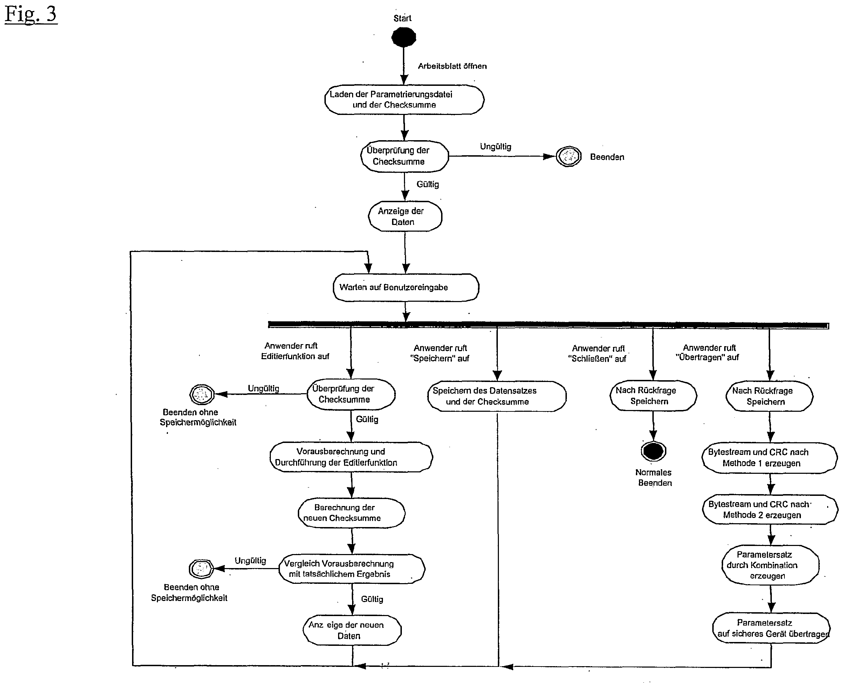

Fig. 3 zeigt nach einmal wesentliche Schritte des erfindungsgemäßen Ablaufs einer gesicherten Parametrierung vom Laden einer Parameterdatei von der Festplatte, über das Modifizieren einzelner Parameterwerte im RAM und dem Speichern der Parameterdatei auf der Festplatte bis zum Übertragen des Parametersatzes an das sichere elektronische "Ziel"-Gerät, gemäß Beispiel nach Fig. 3 an ein sicheres Gerät.

Wie aus Fig. 3 zu sehen, erfolgt das Einleiten eines jeweiligen Verarbeitungsschrittes in dem Gesamtablauf nur unter Ansprechen auf einen zuvor in korrekter bzw. fehlerfreier Weise abgeschlossen Verarbeitungsschritt. Ein nicht abgeschlossener Verarbeitungsschritt, welcher z.B. auch das Warten auf eine Anwendereingabe beinhalten kann, blockiert somit automatisch den Ablauf. Auf einen unkorrekt bzw. fehlerhaft abgeschlossenen Verarbeitungsschritt oder auf einen Verarbeitungsschritt, während welchem ein Fehler erkannt wird, wird der Ablauf zweckmäßiger Weise zur weiteren Erhöhung der Sicherheit automatisch abgebrochen.

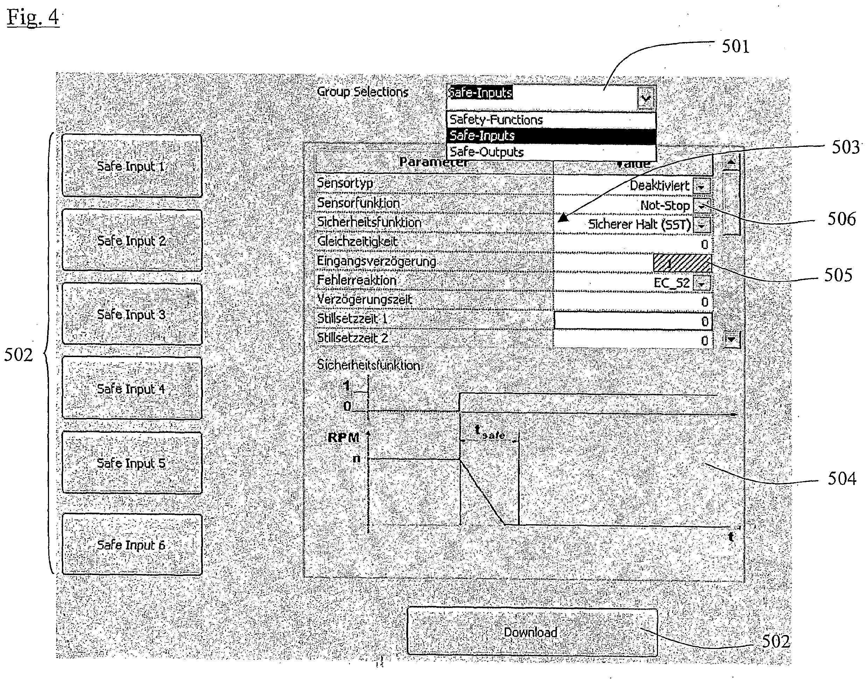

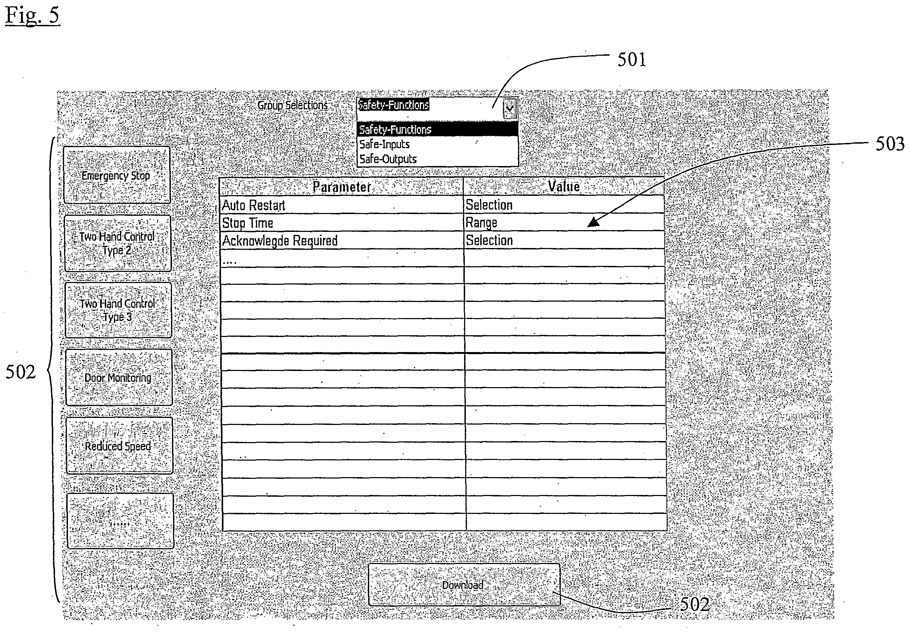

Nachfolgend wird auf die Fig. 4 und 5 Bezug genommen, welche eine beispielhafte Anwenderoberfläche für ein Bediengerät, wie z.B. ein PC oder eine IPC (Inter Process Communnication)-Einheit oder ein anderes elektronisches (Bedien)-Gerät, mit zur sicheren Parametrierung nach IEC 61508 SIL3 implementierten erfindungsgemäßen Sicherheitsmodulen zur Gewährleistung der vorstehend beschrieben Sicherheitsfunktionalitäten.

Wie vorstehend bereits diskutiert kann die Steuerung für die Darstellung und Bearbeitung der sicherheitsrelevanten Parameter für bestimmte Sicherheitsfunktionen, sichere Eingänge und/oder sichere Ausgänge beispielsweise eines Antriebes oder eines sogenannten Safety-Controllers applikationsbasierend durch Implementierung eines Sicherheitsmoduls oder einer Mehrzahl von zusammenwirkenden Sicherheitsmodulen insbesondere als "stand-alone" Programm oder als integraler Bestandteil einer kompletten Software-Plattform ausgeführt werden.

Alle Sicherheitsparameter werden für den Anwender bevorzugt in Gruppen und Untergruppen aufgeteilt und nach Auswahl in einer Tabelle zur Bearbeitung angezeigt. Die Gruppen können gemäß den Fig. 4 und 5 über die mit "Group Selections" bezeichnete ComboBox 501 ausgewählt werden. Als jeweilige Gruppen zur Parametrierung stehen "Sicherheitsfunktionen" (Safety-Functions), "sichere Eingänge" (Safe-Inputs) und "sichere Ausgänge" (Safe-Outputs) zur Auswahl. Gemäß Fig. 4 ist die Oberfläche zur sicheren Parametrierung von sicheren Eingängen, gemäß Fig. 5 die Oberfläche zur sicheren Parametrierung von Sicherheitsfunktionen aktiviert.

Jede Gruppe ist wiederum in Parameteruntergruppen 502 unterteilt, die im vorliegenden Beispiel über entsprechende Tasten/Pushbuttons anwählbar sind. Die jeweils ausgewählte Parameteruntergruppe wird dann in der Tabelle angezeigt.

Gemäß Fig. 4 sind für die Parametergruppe "Safe Inputs" sechs Parameteruntergruppen 502, als "Safe Input 1" bis "Safe Input 6" bezeichnet, vorgehalten. Die jeweilige Auswahl einer Untergruppe bewirkt die Darstellung der entsprechenden Parameter des ausgewählten sicheren Eingangs in einer Tabelle 503, wobei die Parametertypen 503a und die zugeordneten, in der Datenhaltung vorgehaltenen Parameterwerte angezeigt werden. Zweckmäßiger Weise werden, wenn in der Tabelle 503 Einstellungen an Parametern vorgenommen werden, die Abhängigkeiten zu weiteren Parametern haben, die nicht benötigten Parameter automatisch ausgeblendet.

Bevorzugt wird für jeden Parameter eine Grafik 504 hinterlegt, die den Einfluss des Parameter auf das Geräteverhalten und/oder Systemverhalten dem Anwender visuell darstellt. Wird die Auswahl des Parameters in der Tabelle verändert, so ändert sich auch die entsprechende Grafik.

Wenn nun ein Parameter in der Tabelle editiert wird, wird dieser Parameter gemäß vorstehender Beschreibung gesichert in den Speicher des PC abgelegt, an der Anwenderoberfläche gelöscht, wieder aus dem Speicher geholt und an der Oberfläche dargestellt, wodurch entsprechend den Anforderungen der IEC 61508 SIL3 mit entsprechender Sicherheit eine Datenverfälschung bei der Eingabe ausgeschlossen ist.

Werden Parameter-Werte editiert, wie bei Fig. 4 mit 505 gekennzeichnet, so werden die Werte zweckmäßig in hervorgehobener Weise, z.B. in blauer Schrift, dargestellt. Handelt es sich bei den einzustellenden Werten z.B. um Aufzählungen, so kommen in der Tabelle bevorzugt Auswahlboxen 506 zur Anwendung. Auch bei Anwahl einer solchen Box werden die darin dargestellten Werte bevorzugt in hervorgehobener Weise angezeigt, um den Editier-Modus zu veranschaulichen. Für jeden Parameter kann ferner, z.B. im Tooltip eine Beschreibung angezeigt werden. Handelt es sich um Bereichsparameter, so werden sowohl minimaler und maximaler Wert angezeigt, als auch die Schrittweite. Gibt der Anwender einen unzulässigen Parameterwert ein, so wird dies dem Anwender durch anderweitige Hervorhebung, z.B. durch Wechsel der Schriftfarbe für den Parameterwert nach Rot, oder auch akustisch angezeigt.

Wie vorstehend beschrieben, wird die gesicherte Ablage im Speicher insbesondere dadurch sichergestellt, dass bei der Auswahl eines Parameters der gesamte andere Speicherbereich mit sicheren Parametern geschützt und mit einem CRC gesichert wird. Nach der Bearbeitung des einen Parameters wird wieder ein CRC über den gleichen Speicherbereich gebildet und mit dem Eingangs-CRC verglichen. Somit ist eine Datenverfälschung der bereits bearbeiteten sicheren Parameter durch das Editieren eines weiteren einzelnen Parameters entsprechend der IEC 61508 SIL3 ausgeschlossen.

Auf die im Wesentlichen gleiche Weise werden die "Safe-Outputs" und "Safety-Functions" parametriert. Wenn die sichere Parametrierung abgeschlossen ist, kann der Download erfolgen. Wenn der Download, gemäß Fig. 4 und 5 durch Betätigen der Download-Taste 507, aktiviert wird, wird zweckmäßiger Weise ein Dialog eingeblendet, der den Anwender nochmals fragt, ob alle Parameter richtig eingegeben worden sind. Durch entsprechendes Bestätigen dieses Dialoges wird nach zwei diversitären Verfahren jeweils eine Datei mit den einzelen Parametern erzeugt und wiederum jeweils über einen CRC gesichert.

Nach Kombination der diversitär erzeugten Dateien zu einer gesicherten Parameterdatei erfolgt der Download dieser gesicherten Parameterdatei an die Ziel-Hardware, also im zugrundeliegenden Beispiel an den Antrieb oder den Safety-Controller, über einen beliebigen Feldbus oder einen anderen Kommunikationskanal des Herstellers. Im Gegensatz zu bisher üblichen Verfahren wird nur noch der CRC von dem Ziel-Gerät zurückgelesen. Dann werden der CRC von dem Ziel-Gerät mit dem auf dem elektronischen Bediengerät gespeicherten CRC der Parameterdatei verglichen. Wenn diese übereinstimmen, erscheint für den Anwender ein Dialog, ob die sichere Parametrierung erfolgreich war "Senden erfolgreich" / "Senden nicht erfolgreich".

Die Erfindung gewährleistet somit insgesamt ein Rücklesen der sicheren Parametrierung gemäß IEC 61508 SIL3 oder EN 954-1 Kategorie für ein Ziel-Gerät aus dem Speicher eines elektronischen (Bedien)-Gerätes ohne explizites Bestätigen der einzelnen Parameter durch den Anwender.

## Patentansprüche

1. Verfahren zur sicheren Parametrierung von elektronischen Geräten, insbesondere von sicheren Ein- und/oder Ausgängen und/oder von Sicherheitsfunktionen eines elektronischen Geräts, wobei zur Parametrierung vorgesehene Parameterwerte über eine Anwenderoberfläche einer elektronischen Bedieneinrichtung ausgewählt oder eingegeben werden und anschließend an das elektronische Gerät übertragen werden, **dadurch gekennzeichnet, dass**
die ausgewählten oder eingegebenen Parameterwerte vor Übertragung an das elektronische Gerät in wenigstens einem von der Bedieneinrichtung zugreifbaren Arbeitsspeicher gehalten werden und vor Übertragung an das elektronische Gerät zum Zweck der Verifikation der sicheren Parametrierung aus dem Speicher wenigstens einmal rückgelesen werden
wobei für jeden einzelnen Parameterwert nach Auswahl oder Eingabe, die Schritte
- des Speicherns des Parameterwertes in dem von der Bedieneinrichtung zugreifbaren Arbeitsspeicher,
- des Löschens des Parameterwertes auf einer Anwenderanzeige der Bedieneinrichtung und
- des erneutes Aufbauens der Anwenderanzeige durch Rücklesen des gespeicherten Parameterwertes
in automatisierter Prozessroutine durchgeführt werden
und, dass der Schritt des Speicherns ausgewählter oder eingegebener Parameterwerte die Schritte einer jeweiligen gesicherten Modifikation eines zu ändernden Parameterwertes in einem Arbeitsspeicher durch Durchführen einer Überprüfung von auf den ausgewählten oder eingegebenen Parameterwerten basierenden Checksummen umfasst, wobei sichergestellt wird, dass bei einer Eingabe immer nur der tatsächlich zu verändernde Parameterwert modifiziert wird und alle Parameterwerte im Arbeitsspeicher vor der Editierung eines Parameters für Änderungen gesperrt und nach der Editierung des Parameters auf Verfälschung überprüft werden, und zwar durch eine Vorausberechnung der zu erwartenden Checksumme der Parameterwerte im Arbeitsspeicher, die Modifikation eines Parameterwertes und die Kontrolle der tatsächlichen Checksumme der Parameterwerte im Arbeitsspeicher durch Vergleich der vorausberechneten mit tatsächlichen Checksumme, und
wobei der Schritt des Speicherns ausgewählter oder eingegebener Parameterwerte ferner das gesicherte Speichern und Laden von Parameterwerten in bzw. von einem nicht-flüchtigen Speicher umfasst.

2. Verfahren nach vorstehendem Anspruch, ferner **dadurch gekennzeichnet, dass** ein Umwandeln eines Parametersatzes von zu übertragenden Parameterwerten von der Darstellung in einem Speicher zu einer zur Übertragung des Parametersatzes erforderlichen bitweisen nacheinanderangeordneten Darstellung der Parameterwerte in einer Folge von Bytes das Umwandeln nach wenigstens zwei verschiedenen Methoden und das Überprüfen der resultierenden Bytefolgen und derer Checksummen auf Gleichheit umfasst.

3. Verfahren nach vorstehendem Anspruch, ferner **dadurch gekennzeichnet, dass** aus den resultierenden Bytefolgen und deren Checksummen ein zu übertragender Parametersatz kombiniert wird.

4. Verfahren nach vorstehendem Anspruch, ferner **dadurch gekennzeichnet, dass** der zu übertragende Parametersatz zu einer Folge von Bytes mit Parameterwerten und einer Checksumme über die Folge von Bytes kombiniert wird.

5. Verfahren nach vorstehendem Anspruch, ferner **dadurch gekennzeichnet, dass** nach Übertragung des kombinierten Parametersatzes die Checksumme des übertragenen Parametersatzes zurück gelesen wird und mit der in einem von der Bedieneinrichtung aus zugreifbaren Speicher gehaltenen Checksumme des entsprechenden Parametersatzes vor Übertragung verglichen wird.

6. Verfahren nach einem der vorstehenden Ansprüche, welches Rechnergestützt und Softwarebasiert durchgeführt wird.

7. Verfahren nach einem der vorstehenden Ansprüche, bei welchem lediglich unter Ansprechen auf einen innerhalb des Gesamtablaufs der sicheren Parametrierung jeweils in korrekter bzw. fehlerfreier Weise abgeschlossenen Verarbeitungsschritt automatisiert ein nächstfolgender Verarbeitungsschritte eingeleitet wird.

8. Vorrichtung zur Durchführung des Verfahrens nach einem der vorstehenden Ansprüche, umfassend eine Anwenderoberfläche einer elektronischen Bedieneinrichtung zur Auswahl oder Eingabe von zur Parametrierung vorgesehenen Parameterwerte und wenigstens ein Sicherheitsmodul, welches die Speicherung der zur Übertragung an das elektronische Gerät zu dessen Parametrierung vorgesehenen und über eine Anwenderoberfläche der elektronischen Bedieneinrichtung ausgewählten oder eingegebenen Parameterwerte in wenigstens einem von der Bedieneinrichtung zugreifbaren Arbeitsspeicher sowie wenigstens ein Rücklesen der ausgewählten oder eingegebenen Parameterwerte aus dem Speicher zum Zweck der Verifikation der sicheren Parametrierung bewirkt, wobei das wenigstens eine Sicherheitsmodul alleine oder in Zusammenwirken mit anderen Modulen und/oder der elektronischen Bedieneinrichtung für jeden einzelnen Parameterwert nach Auswahl oder Eingabe ausgebildet ist, zum Bewirken in automatisierter Prozessroutine
- des Speicherns des Parameterwertes in wenigstens einem des wenigstens einen von der Bedieneinrichtung zugreifbaren Arbeitsspeicher,
- des Löschens des Parameterwertes auf einer Anwenderanzeige der Bedieneinrichtung und
- des erneuten Aufbauens der Anwenderanzeige durch Rücklesen des gespeicherten Parameterwertes;
und wobei das wenigstens eine Sicherheitsmodul, alleine oder in Zusammenwirken mit anderen Modulen und/oder der elektronischen Bedieneinrichtung ausgebildet ist, zum Bewirken des Rücklesens der Parameterwerte aus dem von der Bedieneinrichtung zugreifbaren Arbeitsspeicher vor Übertragung an das elektronische Gerät zur Verifikation einer gesicherten Auswahl oder Eingabe von Parameterwerten,
wobei das wenigstens eine Sicherheitsmodul alleine oder in Zusammenwirken mit anderen Modulen und/oder der elektronischen Bedieneinrichtung ausgebildet ist zum Speichern ausgewählter oder eingegebener Parameterwerte zum Bewirken einer jeweiligen gesicherten Modifikation eines zu ändernden Parameterwertes in einem Arbeitsspeicher und des gesicherten Speicherns und Ladens von Parameterwerten in bzw. von einem nicht-flüchtigen Speicher,
zum Bewirken einer Überprüfung von auf den ausgewählten oder eingegebenen Parameterwerten basierenden Checksummen ausgebildet ist
und zum Bewirken der Vorausberechnung der zu erwartenden Checksumme der Parameterwerte im Arbeitsspeicher und einer Kontrolle der tatsächlichen Checksumme der Parameterwerte im Arbeitsspeicher.

9. Vorrichtung nach vorstehendem Anspruch, wobei das wenigstens eine Sicherheitsmodul die Anwenderoberfläche zur Darstellung und Bearbeitung der Parameter zur Parametrierung steuert.

10. Vorrichtung nach einem der beiden vorstehenden Ansprüche, wobei das wenigstens eine Sicherheitsmodul mit der Bedieneinrichtung zusammenwirkt.

11. Vorrichtung nach einem der drei vorstehenden Ansprüche, wobei das wenigstens eine Sicherheitsmodul wenigstens teilweise ein Software-basiertes Modul ist.

12. Vorrichtung nach vorstehendem Anspruch, wobei das wenigstens eine Sicherheitsmodul integraler Bestandteil einer kompletten Software-Plattform ist.

13. Vorrichtung nach einem der vorstehenden Ansprüche 8 bis 12, ferner **gekennzeichnet durch** wenigstens ein Sicherheitsmodul, welches alleine oder in Zusammenwirken mit anderen Modulen und/oder der elektronischen Bedieneinrichtung zum Bewirken eines Umwandelns eines Parametersatzes zu einer bitweisen nacheinanderangeordneten Darstellung der Parameterwerte in einer Folge von Bytes nach wenigstens zwei verschiedenen Methoden und das Überprüfen der resultierenden Bytefolgen und derer Checksummen auf Gleichheit ausgebildet ist.

14. Vorrichtung nach vorstehendem Anspruch, wobei das wenigstens eine Sicherheitsmodul, alleine oder in Zusammenwirken mit anderen Modulen und/oder der elektronischen Bedieneinrichtung zum Bewirken eines Parametersatzes aus einer Kombination der resultierenden Bytefolgen und deren Checksummen ausgebildet ist.

15. Vorrichtung nach einem der vorstehenden Ansprüche 8 bis 14, ferner **gekennzeichnet durch** wenigstens ein Sicherheitsmodul, welches alleine oder in Zusammenwirken mit anderen Modulen und/oder der elektronischen Bedieneinrichtung zum Bewirken eines Rücklesens der Checksumme eines übertragenen Parametersatzes, eines Zugreifens auf die in einem der Bedieneinrichtung zugeordneten Speicher gehaltenen Checksumme und des Vergleichens der beiden Checksummen ausgebildet ist.

16. Vorrichtung nach einem der vorstehenden Ansprüche 8 bis 15, wobei das wenigstens eine Sicherheitsmodul alleine oder in Zusammenwirken mit anderen Modulen und/oder der elektronischen Bedieneinrichtung lediglich unter Ansprechen auf einen innerhalb des Gesamtablaufs der sicheren Parametrierung jeweils in korrekter bzw. fehlerfreier Weise abgeschlossenen Verarbeitungsschritt zum automatisierten Einleiten eines nächstfolgenden Verarbeitungsschrittes ausgebildet ist.

17. Verwendung eines Verfahrens und/oder einer Vorrichtung nach einem der vorstehenden Ansprüche zur sicheren Parametrierung von Antrieben, Speicherprogrammierbaren Steuerungen oder elektronischen Sicherungseinrichtungen.

18. Verwendung nach vorstehendem Anspruch unter Nutzung eines Feldbusses .

19. Rechnerlesbares Speichermedium mit darauf gespeicherten, auslesbaren Informationen, die, ausgelesen durch eine rechnergestützte Einrichtung zur Auswahl oder Eingabe von zur Übertragung an ein sicheres elektronisches Gerät für dessen Parametrierung vorgesehenen Parametern, eine Anpassung der Einrichtung zur Durchführung eines Verfahrens nach einem der vorstehenden Ansprüche 1 bis 7 bewirkt.

## Claims

1. A method for safe parameterization of electronic devices, in particular of safe inputs and/or outputs and/or safety functions of an electronic device, wherein parameter values intended for parameterization are selected or entered via a user interface of an electronic control device, and are subsequently transmitted to the electronic device;
**characterized in that**
before being transmitted to the electronic device, the selected or entered parameter values are stored in at least one random access memory that is accessible by the control device, and are read back from the memory at least once before being transmitted to the electronic device, for the purpose of verifying the safe parameterization;
wherein, after having been selected or entered, the following steps are performed for each individual parameter value in an automated process routine:
- storing the parameter value in the memory accessible by the control device;
- deleting the parameter value on a user display of the control device; and
- reestablishing the user display by reading back the stored parameter value; and **in that**
the step of storing selected or entered parameter values comprises the steps of a respective safe modification of a parameter value to be modified in a random access memory by performing a check of checksums based on the selected or entered parameter values, thereby ensuring that only the actual parameter value to be modified is modified in the case of an entry, and that all parameter values in the random access memory are blocked for modification before editing a parameter, and are checked for corruption after the parameter has been edited,
by pre-calculating the checksum to be expected of the parameter values in the random access memory,
modifying a parameter value, and checking the actual checksum of the parameter values in the random access memory by comparing the pre-calculated with the actual checksum; and
wherein the step of storing selected or entered parameter values further comprises safe storage and loading of parameter values in or from a non-volatile memory.

2. The method according to the preceding claim, furthermore **characterized in that** a conversion of a parameter set of parameter values to be converted from the representation in a memory to a bit-by-bit sequentially arranged representation of the parameter values in a sequence of bytes as required for transmission of the parameter set comprises conversion using at least two different methods and checking the resulting byte sequences and checksums thereof for equality.

3. The method according to the preceding claim, furthermore **characterized in that** a parameter set to be transmitted is combined from the resulting byte sequences and their checksums.

4. The method according to the preceding claim, furthermore **characterized in that** the parameter set to be transmitted is combined to form a sequence of bytes with parameter values and a checksum over the sequence of bytes.

5. The method according to the preceding claim, furthermore **characterized in that** after transmission of the combined parameter set, the checksum of the transmitted parameter set is read back and is compared with the checksum of the corresponding parameter set as stored in a memory that is accessible by the control device before transmission.

6. The method according to any one of the preceding claims, which is carried out on a computer-assisted and software-assisted basis.

7. The method according to any one of the preceding claims, wherein a subsequent processing step is only automatically initiated in response to a processing step which has been completed in a correct and error-free manner within the overall sequence of safe parameterization.

8. A device for carrying out the method according to any one of the preceding claims, comprising a user interface of an electronic control device for selecting or entering parameter values intended for parameterization and at least one safety module for causing that the parameter values intended for transmission to the electronic device for parameterization thereof and selected or entered via a user interface of the electronic control device are stored in at least one random access memory that is accessible by the control device, and that the selected or entered parameter values are read back from the memory at least once for the purpose of verifying the safe parameterization; wherein the at least one safety module, alone or in cooperation with other modules and/or with the electronic control device, is adapted for causing, in an automated process routine and for each individual parameter value after it has been selected or entered,
- storing of the parameter value in at least one of the at least one random access memories accessible by the control device;
- deleting of the parameter value on a user display of the control device; and
- reestablishing of the user display by reading back the stored parameter value;
and wherein the at least one safety module, alone or in cooperation with other modules and/or with the electronic control device, is adapted for causing the reading back of the parameter values from the random access memory accessible by the control device prior to the transmission to the electronic device for verification of safe selection or entering of parameter values;
wherein the at least one safety module, alone or in cooperation with other modules and/or with the electronic control device, is adapted for storing selected or entered parameter values for causing a respective safe modification of a parameter value to be edited in a random access memory and the safe storing and loading of parameter values in or from a non-volatile memory, for causing a check of checksums that are based on the selected or entered parameter values, and for causing pre-calculation of the checksum to be expected of the parameter values in the random access memory, and checking of the actual checksum of the parameter values in the random access memory.

9. The device according to the preceding claim, wherein the at least one safety module controls the user interface for displaying and editing the parameters for parameterization.

10. The device according to any one of the two preceding claims, wherein the at least one safety module cooperates with the control device.

11. The device according to any one of the three preceding claims, wherein the at least one safety module is at least partially a software-based module.

12. The device according to the preceding claim, wherein the at least one safety module is an integral component of a complete software platform.

13. The device according to any one of the preceding claims 8 to 12, furthermore **characterized by** at least one safety module which is adapted, alone or in cooperation with other modules and/or with the electronic control device, to cause a parameter set to be converted into a bit-by-bit sequentially arranged representation of the parameter values in a sequence of bytes according to at least two different methods, and to check the resulting byte sequences and checksums thereof for equality.

14. The device according to the preceding claim, wherein the at least one safety module is adapted, alone or in cooperation with other modules and/or with the electronic control device, to cause a parameter set to be formed from a combination of the resulting byte sequences and their checksums.

15. The device according to any one of the preceding claims 8 to 14, furthermore **characterized by** at least one safety module which alone or in cooperation with other modules and/or with the electronic control device is adapted to cause reading back of the checksum of a transmitted parameter set, accessing the checksum stored in a memory associated with the control device, and comparing the two checksums.

16. The device according to any one of the preceding claims 8 to 15, wherein the at least one safety module is adapted, alone or in cooperation with other modules and/or with the electronic control device, to automatically initiate a subsequent processing step only in response to a processing step which has been completed in a correct and error-free manner within the overall sequence of safe parameterization.

17. Use of a method and/or a device according to any one of the preceding claims for safe parameterization of drives, programmable logic controllers, or electronic safety devices.

18. Use according to the preceding claim using a fieldbus.

19. A computer-readable storage medium having readable information stored thereon, which when being read by a computer-assisted device for selecting or entering parameters which are intended to be transmitted to a safe electronic device for parameterization thereof causes the device to be configured for performing a method according to any one of the preceding claims 1 to 7.

## Revendications

1. Procédé de paramétrage sécurisé d'appareils électroniques, en particulier d'entrées et/ou de sorties sécurisées et/ou de fonctions de sécurité d'un appareil électronique, dans lequel des valeurs de paramètres prévues pour le paramétrage sont sélectionnées ou saisies sur une surface d'utilisateur d'un dispositif de commande électronique puis sont transmises à l'appareil électronique, **caractérisé en ce que** les valeurs de paramètres sélectionnées ou saisies sont, avant transmission à l'appareil électronique, retenues dans au moins une mémoire de travail accessible par le dispositif de commande et sont relues au moins une fois dans la mémoire avant transmission à l'appareil électronique aux fins de vérification du paramétrage sécurisé,
où, pour chaque valeur de paramètre individuelle après sélection ou saisie, les étapes
- de mémorisation de la valeur de paramètre dans la mémoire de travail accessible par le dispositif de commande,
- de suppression de la valeur de paramètre sur un affichage d'utilisateur du dispositif de commande, et
- de recréation de l'affichage d'utilisateur par relecture de la valeur de paramètre mémorisée
sont exécutées dans une routine de processus automatisée,
et, **en ce que** l'étape de mémorisation de valeurs de paramètres sélectionnées ou saisies comprend les étapes d'une modification sécurisée d'une valeur de paramètre à changer dans une mémoire de travail par exécution d'une vérification des sommes de contrôle basées sur les valeurs de paramètres sélectionnées ou saisies, dans lequel il est assuré que lors d'une saisie, n'est toujours modifiée que la valeur de paramètre à changer effectivement, et que toutes les valeurs de paramètres dans la mémoire de travail sont bloquées avant l'édition d'un paramètre pour modification, et que l'absence d'erreurs y est contrôlée après édition du paramètre, en l'occurrence au moyen d'un calcul préalable de la somme de contrôle attendue des valeurs de paramètres dans la mémoire de travail, de la modification d'une valeur de paramètre et du contrôle de la somme de contrôle effective des valeurs de paramètres dans la mémoire de travail par comparaison de la somme de contrôle préalablement calculée avec la somme de contrôle effective, et
dans lequel l'étape de mémorisation de valeurs de paramètres sélectionnées ou saisies comprend en outre la mémorisation et le chargement sécurisés de valeurs de paramètres dans ou depuis une mémoire non volatile.

2. Procédé selon la revendication précédente, **caractérisé en outre en ce qu'**une conversion d'un ensemble de valeurs de paramètres à transmettre, de la représentation dans une mémoire en une représentation binaire des valeurs de paramètres successivement ordonnées dans une séquence d'octets, exigée pour la transmission de l'ensemble de paramètres, comprend la conversion suivant au moins deux méthodes différentes et la vérification d'égalité des séquences d'octets résultantes et de leurs sommes de contrôle.

3. Procédé selon la revendication précédente, **caractérisé en outre en ce qu'**un ensemble de paramètres à transmettre est combiné à partir des séquences d'octets résultantes et de leurs sommes de contrôle.

4. Procédé selon la revendication précédente, **caractérisé en outre en ce que** l'ensemble de paramètres à transmettre est combiné en une séquence d'octets avec des valeurs de paramètres et une somme de contrôle pour la séquence d'octets.

5. Procédé selon la revendication précédente, **caractérisé en outre en ce que**, après transmission de l'ensemble de paramètres combiné, la somme de contrôle de l'ensemble de paramètres transmis est relue et comparée avec la somme de contrôle de l'ensemble de paramètres correspondant avant transmission, retenue dans une mémoire accessible par le dispositif de commande.

6. Procédé selon l'une des revendications précédentes, exécuté de manière assistée par ordinateur et basée logiciel.

7. Procédé selon l'une des revendications précédentes, où une étape de traitement consécutive n'est automatiquement initialisée qu'en réaction à une étape de traitement terminée de manière correcte ou exempte d'erreur pendant tout le déroulement du paramétrage sécurisé.

8. Dispositif pour l'exécution du procédé selon l'une des revendications précédentes, comprenant une surface d'utilisateur d'un dispositif de commande électronique pour la sélection ou la saisie de valeurs de paramètres prévues pour paramétrage et au moins un module de sécurité, lequel procède à la mémorisation des valeurs de paramètres prévues pour transmission à l'appareil électronique pour le paramétrage de celui-ci et saisies et sélectionnées sur une surface d'utilisateur du dispositif de commande électronique, dans au moins une mémoire de travail accessible par le dispositif de commande, et au moins à une relecture des valeurs de paramètres sélectionnées ou saisies dans la mémoire aux fins de vérification du paramétrage sécurisé, dans lequel ledit au moins un module de sécurité est prévu pour exécuter, seul ou en coopération avec d'autres modules et/ou avec le dispositif de commande électronique, dans une routine de processus automatisée pour chaque valeur de paramètre individuelle après sélection ou saisie,
- la mémorisation de la valeur de paramètre dans au moins une mémoire de travail accessible par le dispositif de commande,
- la suppression de la valeur de paramètre sur un affichage d'utilisateur du dispositif de commande, et
- la recréation de l'affichage d'utilisateur par relecture de la valeur de paramètre mémorisée ;
et dans lequel ledit au moins un module de sécurité est prévu pour exécuter, seul ou en coopération avec d'autres modules et/ou avec le dispositif de commande électronique, la relecture des valeurs de paramètres dans la mémoire de travail accessible par le dispositif de commande avant transmission à l'appareil électronique pour vérification d'une sélection ou saisie sécurisées de valeurs de paramètres,
dans lequel ledit au moins un module de sécurité est prévu pour mémoriser, seul ou en coopération avec d'autres modules et/ou avec le dispositif de commande électronique, des valeurs de paramètres sélectionnées ou saisies pour procéder à une modification sécurisée d'une valeur de paramètre à changer dans une mémoire de travail et à la mémorisation et au chargement sécurisés de valeurs de paramètres dans ou depuis une mémoire non volatile,
est prévu pour l'exécution d'une vérification des sommes de contrôle basées sur les valeurs de paramètres sélectionnées ou saisies,
et pour l'exécution du calcul préalable de la somme de contrôle attendue des valeurs de paramètres dans la mémoire de travail, et d'un contrôle de la somme de contrôle effective des valeurs de paramètres dans la mémoire de travail.

9. Dispositif selon la revendication précédente, dans lequel ledit au moins un module de sécurité commande la surface d'utilisateur pour la représentation et le traitement des paramètres pour paramétrage.

10. Dispositif selon l'une des deux revendications précédentes, dans lequel ledit au moins un module de sécurité coopère avec le dispositif de commande.

11. Dispositif selon l'une des trois revendications précédentes, dans lequel ledit au moins un module de sécurité est au moins partiellement un module basé logiciel.

12. Dispositif selon la revendication précédente, dans lequel ledit au moins un module de sécurité est partie intégrante d'une plate-forme logicielle complète.

13. Dispositif selon l'une des revendications précédentes 8 à 12, **caractérisé en outre par** au moins un module de sécurité, lequel est prévu pour exécuter, seul ou en coopération avec d'autres modules et/ou avec le dispositif de commande électronique, une conversion suivant au moins deux méthodes différentes d'un ensemble de paramètres en une représentation binaire des valeurs de paramètres successivement ordonnées dans une séquence d'octets, et la vérification d'égalité des séquences d'octets résultantes et de leurs sommes de contrôle.

14. Dispositif selon la revendication précédente, dans lequel ledit au moins un module de sécurité est prévu pour exécuter, seul ou en coopération avec d'autres modules et/ou avec le dispositif de commande électronique, un ensemble de paramètres à partir de la combinaison des séquences d'octets résultantes et de leurs sommes de contrôle.

15. Dispositif selon l'une des revendications précédentes 8 à 14, **caractérisé en outre par** au moins un module de sécurité, lequel est prévu pour exécuter, seul ou en coopération avec d'autres modules et/ou avec le dispositif de commande électronique, une relecture de la somme de contrôle d'un ensemble de paramètres à transmettre, un accès à la somme de contrôle retenue dans une mémoire affectée au dispositif de commande et la comparaison des deux sommes de contrôle.

16. Dispositif selon l'une des revendications précédentes 8 à 15, dans lequel ledit au moins un module de sécurité est prévu pour n'initialiser automatiquement, seul ou en coopération avec d'autres modules et/ou avec le dispositif de commande électronique, une étape de traitement consécutive qu'en réaction à une étape de traitement terminée de manière correcte ou exempte d'erreur pendant tout le déroulement du paramétrage sécurisé.

17. Utilisation d'un procédé et/ou d'un dispositif selon l'une des revendications précédentes pour le paramétrage sécurisé d'entraînements, de commandes programmables ou de dispositifs de sécurité électroniques.

18. Utilisation selon la revendication précédente, recourant à un bus de terrain.

19. Support de mémoire lisible par ordinateur où sont stockées des informations lisibles, qui, extraites par un dispositif assisté par ordinateur pour la sélection ou la saisie de paramètres prévus pour transmission à un appareil électronique sécurisé pour le paramétrage de celui-ci, provoquent une adaptation du dispositif afin d'exécuter un procédé selon l'une des revendications précédentes 1 à 7.
